# EUROPÄISCHE PATENTSCHRIFT

(11) **EP 1 865 257 B1**
(45) Veröffentlichungstag und Bekanntmachung des Hinweises auf die Patenterteilung: **26.03.2014**
(21) Anmeldenummer: 07011290.9
(22) Anmeldetag: 08.06.2007
(51) Int. Cl.: B01D 53/68, F23J 15/00

(54) **Verfahren zur Reduzierung halogen-salzinduzierter Korrosion und Dioxin-sowie Furanemissionen in Verbrennungsanlagen**
Method for reducing halogen salt induced corrosion and dioxine and furan emissions in combustion plants
Procédé destiné à la réduction de la corrosion induite par halogènes salins et les émissions de furanes et de dioxine dans des installations de combustion

(30) Priorität: 09.06.2006 DE 102006027243
(43) Veröffentlichungstag der Anmeldung: 12.12.2007
(73) Patentinhaber: CheMin GmbH, 86167 Augsburg (DE)
(72) Erfinder: Krüger, Jörg, 92421 Schwandorf (DE); Spiegel, Wolfgang, 86415 Mering (DE); Jordan, Renate, 81667 München (DE); Magel, Gabriele, 86157 Augsburg (DE)
(74) Vertreter: Müller-Wolff, Thomas

(56) Entgegenhaltungen:
- EP-A1- 0 435 848
- EP-A1- 0 547 295
- EP-A1- 0 989 365
- EP-A2- 0 860 657
- WO-A-02/059526
- DE-A1- 3 310 500
- DE-A1- 19 849 021
- US-A- 3 955 512
- US-A- 3 993 429
- US-A- 4 924 784
- US-A1- 2004 074 427
- US-A1- 2006 021 554

## Beschreibung

Die Erfindung betrifft ein Verfahren zur Reduzierung halogensalz-induzierter Korrosionen an den Heizflächen eines Verbrennungskessels und der de-Novo-Synthese von Dioxinen und Furanen, wobei in dem Feuerraum schwefelhaltige Produkte verbrannt werden.

Ein Verfahren der vorgenannten Art wird in der EP 0435848 beschrieben. In weiteren Druckschriften wie den Patentschriften DE 101 31 464 B4, DE 198 02 274 C2 und EP 0406710 wird die Dosierung von Schwefel und schwefelhaltigen Verbindungen zur Minderung der Korrosionen und zur Reduzierung der Emissionen von C12, Dioxinen sowie Furanen genannt. Die Reduktion der Dioxinbildung wird nach DE 101 31 464 B4 auf die Reduktion der C12 Konzentration zurückgeführt.

Insbesondere in den Schriften EP 0435848 A1, DE 10131464 B4 und EP 0406710 A2 wird darauf hingewiesen, dass bei der Schwefeldosierung das molare Verhältnis von Schwefel zu Chlor im Abgas gleich oder vorteilhaft größer als 1 sein soll. Bei den genannten Verfahren erfolgt die Zugabe von Schwefel oder Schwefelverbindungen derart, dass es mit den im Brennstoff enthaltenen Bestandteilen zu SO₂ oxidiert.

### Ursachen für verstärkte Korrosionen in Verbrennungsanlagen für Müll und Biostoffe

Mit dem zunehmenden Umweltbewusstsein und dem Anstieg der Kosten für fossile Brennstoffe werden neben Müll verstärkt Biomassen in Kesselanlagen zur Dampferzeugung genutzt.

Die thermische Verwertung von Biomasse wird wegen der CO₂-Bewertung über die Verkaufserlöse des produzierten Stromes gefördert. Diese Biobrennstoffe werden unter anderem häufig aus Sperrmüll und Müll aussortiert. Es lässt sich somit nicht vermeiden, dass neben dem Holz andere Begleitstoffe wie zink- und bleihaltige Farben (Bleiweiß) sowie halogenhaltige, insbesondere chlorhaltige, Stoffe verbrannt werden. Die reinen Biostoffe enthalten unterschiedliche Konzentrationen an Alkalien wie Kalium und Natrium, die bei der Verbrennung zum größten Teil verdampfen.

Hinzu kommt die anspruchsvolle Verwertungsquote, die beim Automobilrecycling ab dem 01.01.2006 von der Altfahrzeug Verordnung gefordert wird. Laut dieser Vorschrift müssen 85 % des Schredderrückstands der Altfahrzeugmasse verwertet werden, wobei von diesem Anteil 80% der Wiederverwendung oder stofflichen Verwertung zuzuführen ist. Bis jetzt wurde die bei der Verwertung von Altfahrzeugen oder Altgeräten anfallende Schredderleichtfraktion auf Deponien abgelagert. Es ist davon auszugehen, dass diese Fraktion zukünftig ebenfalls thermisch verwertet wird. Diese Schredderabfälle haben bezogen auf ihre Masse einen extrem hohen Anteil an Schwermetallen. Somit kommen sowohl in Kesseln zur Müllverbrennung als auch in Kesseln zur thermischen Nutzung von Biomassen erhebliche und stark schwankende Frachten an Schwermetall-, Alkali-, und Halogenverbindungen in die Verbrennung.

Die Tendenz zur Verdampfung oben genannter Bestandteile ist durch den Anstieg der Verbrennungstemperaturen in den letzten Jahren erheblich angestiegen. Für den Anstieg der Verbrennungstemperaturen können folgende Umstände getrennt für sich oder gemeinsam in Frage kommen.

Durch die in Europa gesetzlich vorgeschriebenen Regelungen zu den Mindestverbrennungsbedingungen wurden und werden zur Einhaltung der Mindesttemperatur von 850°C für 2 Sekunden Verweilzeit nach Zuführung der letzten Verbrennungsluft insgesamt geringe Luftüberschüsse angestrebt. Vor dem 20.08.2003 wurde durch nationale und europäische Regelungen sichergestellt, dass ein Mindestsauerstoffgehalt von 6 Vol % eingehalten werden musste, dies entspricht einem Luftüberschuss von ca. 50 %. Der Sollwert der geregelten Sauerstoffkonzentration musste wegen der praktisch erreichbaren Regelgenauigkeit zur Sicherstellung der Einhaltung der Mindestsauerstoffkonzentration von 6 auf ca. 8 Vol % eingestellt werden. Hierdurch lag der Rauchgasvolumenstrom ca. 1,7-fach über dem theoretisch notwendigen Rauchgasvolumenstrom. Dies stand den angestrebten hohen Verbrennungstemperaturen und dem erreichbaren Kesselwirkungsgrad entgegen. Weiterhin musste die Rauchgasreinigung für eben diese erhöhte Rauchgasmenge ausgelegt werden. Die EU-Richtlinie 2000/76/EG folgte dieser grundsätzlich berechtigten Kritik und hob die Forderung nach dem Mindestsauerstoffgehalt auf.

Die Novellierung der 17. BlmSchV diente der Umsetzung der Anforderungen der EU-Richtlinie 2000/76/EG über die Verbrennung von Abfällen in nationales Recht. In dieser neuen Fassung der 17. BlmSchV wird die Einhaltung der Mindestsauerstoffkonzentration von 6 Vol % nicht mehr gefordert.

Als Folge dieser Entwicklung sind die Verbrennungstemperaturen angestiegen und die spezifischen Verbrennungsluft- sowie Rauchgasvolumina gefallen. Die Erkenntnis, dass mit dieser Entwicklung verstärkte Korrosionen und Ablagerungen einhergehen, kam sehr spät.

Der Kostendruck bei den Brennstoffen hat auch dazu geführt, dass die heizwertreichen Fraktionen aus dem Abfall aussortiert werden und beispielsweise bei der Kohleverbrennung zudosiert werden. Auch hier hat man erkennen müssen, dass die Korrosionsneigung der Rauchgase durch die Mitverbrennung von heizwertreichen, chlor- und schwermetallhaltigen Abfallfraktionen angestiegen ist.

Die Dioxinemissionen von Müllverbrennungsanlagen haben sehr lange die Diskussionen für das Für und Wider von Verbrennungsanlagen geprägt. Zwischenzeitlich können die Dioxine und Furane aus dem Rauchgas sicher abgeschieden werden, so dass dieser Typ von Verbrennungsanlagen umwelttechnisch gesehen eine Dioxin- und Furan-Senke ist. Durch eine gute Verbrennungsführung mit ausreichender Verweilzeit bei hohen Mindesttemperaturen werden praktisch alle über die Abfälle eingebrachten Dioxine und Furane zerstört. Man hat jedoch feststellen müssen, dass über eine de Novo Synthese im konvektiven Bereich des Kessels bei Rauchgastemperaturen zwischen 200 und 400°C neue Dioxine und Furane gebildet werden. Diese Bildung verläuft katalytisch an den Belägen der Heizflächen. Als katalytisch wirksame Verbindung werden Cu-Verbindungen angenommen.

### Korrosionsmechanismen

Bei dem Betrieb der Verbrennungsanlagen für Müll und Biostoffe sowie der Mitverbrennung von heizwertreichen, chlor- und schwermetallhaltigen Abfallfraktionen in Kohlekesseln hat man schnell erfahren müssen, dass die Korrosionsschäden an den Heizflächen der Kessel im Vergleich zu den rein kohlebefeuerten Kesseln bei wesentlich tieferen Temperaturen zu Betriebsstörungen und notwendigen Reparaturen führen. Dies hat dazu geführt, dass die Dampfparameter bei Kesseln von Verbrennungsanlagen für Müll und Biostoffe wesentlich moderater und damit aus thermodynamischer Sicht ungünstiger gewählt werden mussten. Während bei kohle- und ölbefeuerten Kesseln Dampfdrücke von deutlich über 100 bar und Überhitzungstemperaturen von über 500°C Stand der Technik sind, werden die meisten Abfallverbrennungsanlagen mit Dampfdrücken von ca. 40 bar und Überhitzungstemperaturen von ca. 400°C betrieben. Es wurden und werden Anlagen mit höheren Dampfparametern betrieben. Es hat sich jedoch gezeigt, dass die Aufwendungen zur Vermeidung der Korrosionen und die notwendigen Reparaturkosten diesem Streben nach höheren Dampfparametern und damit höheren Wirkungsgraden widersprechen können. Bei der Mitverbrennung der oben genannten Fraktionen mit Kohle sind Schadensformen aufgetreten, die vor der Mitverbrennung nicht bekannt waren.

Bei der Ursachenforschung der Korrosionsschäden hat man sich zunächst auf die möglicherweise schlechteren Verbrennungsbedingungen, die daraus resultierenden höheren CO-Konzentrationen und deren Reaktionen mit den Kesselstählen konzentriert. Man hat jedoch bald erkannt, dass eine wesentliche Ursache der Korrosionsschäden die Bildung von halogen-, schwefel-, alkali- und/oder erdalkalihaltigen Schwermetallmischsalzen ist. Diese Salze erreichen besonders tiefe eutektische Schmelztemperaturen, die bis in den Bereich von 230°C sinken können. Entsprechend hoch sind die Partialdrücke dieser Salze - insbesondere kann dies auch den Chlorpartialdruck betreffen - bei den üblichen Mediumstemperaturen der Kesselwerkstoffe (250-400°C). Diese Salze können die Kesselstähle sowohl in Form von Salzschmelzen schädigen, als auch auf dem Wege des Chlorpartialdrucks. Der Angriff durch Salzschmelzen wird als "salzschmelzeninduzierte Korrosion" bezeichnet. Der Angriff durch Chlorpartialdruck wird als "chlorinduzierte Hochtemperaturkorrosion" bezeichnet. Aufgrund der gegebenen Zusammensetzung der Brennstoffe - z. B. chlorhaltige Abfälle, belastete Hölzer etc. - sowie aufgrund der hohen Verbrennungstemperaturen ist die Bildung dieser Schwermetallmischsalze nicht zu verhindern.

Bei der Verbrennung von schwefelhaltigen und ggf. auch salzhaltigen Kohlen sind grundsätzlich gleichartige chemische Verbindungen zu erwarten. Der wesentliche Unterschied liegt darin, dass die schwefelreichen Schwermetallmischsalze erst bei deutlich höheren Temperaturen über 400°C zur Bildung von eutektischen Schmelzen neigen und damit erst bei deutlich höheren Temperaturen zu Schädigung der Kesselstähle führen.

Nachdem dieser Zusammenhang erkannt und zugleich festgestellt wurde, dass bei gleichzeitigem Vorliegen von Schwefel und Chlor im Brennstoff die gebildeten Mischsalze im wesentlichen Schwefel enthielten, wurden entsprechende Versuche durchgeführt, bei denen den Abfällen hoch schwefelhaltige Kohle zugesetzt wurde. Diese Versuche waren hinsichtlich der Minderung der Korrosionsneigung erfolgreich. Bei den Versuchen wurde zusätzlich erkannt, dass die Dioxinkonzentrationen im Rohgas bei Einsatz schwefelhaltiger Kohle gefallen sind und dass die katalytischen Eigenschaften der Beläge für die de Novo Synthese von Dioxin durch Schwefelverbindungen (Oxide oder Sulfide) vergiftet wurde (EP 0435848 A1).

Da mit dem zugesetzten Anteil der schwefelhaltigen Kohle die Verbrennungsleistung des Abfalls abfiel und in der Abgasreinigung zusätzlich entsprechende Produkte zur Schwefeldioxidabscheidung eingesetzt werden mussten, konnte sich das Verfahren nicht durchsetzen.

In der Anmeldung EP 0435848 A1 wird das Verhältnis im Bereich von 0,8 bis 1,5 genannt. Zusätzlich wird in der Schrift DE 101 31 464 B4 noch darauf hingewiesen, dass die Dosierung so gewählt werden sollte, dass am Austritt des Kessels zumindest 1000 mg/Nm³ SO2 vorliegen sollte. WO 02/059526 beschreibt ein Verfahren zur Verminderung der Dioxin- und Furanbildung durch Zugabe von SO₃ erzeugenden Additiven.

Die bisher in Bezug auf die Chlorkonzentrationen angestrebten höheren molaren Konzentrationen von Schwefel und die dafür notwendige Dosierung von Schwefel bzw. schwefelhaltigen Verbindungen erfordern in der Rauchgasreinigung entsprechend hohen Aufwand hinsichtlich der Neutralisation.

Ferner ist zu berücksichtigen, dass bei der oben beschriebenen Mitverbrennung von heizwertreichen, chlor- und schwermetallhaltigen Abfallfraktionen in Kohtekesseln Korrosionen beobachtet werden.

Aufgabe der vorliegenden Erfindung ist es, ein Verfahren anzubieten, welche die Nachteile des Standes der Technik überwindet, die de-Novo-Synthese von Dioxinen hemmt und die halogensalz-induzierte Korrosion von Wärmetauscherflächen verringert.

Es wurde daher auf Basis der oben genannten Erkenntnisse nach einem Verfahren gesucht, das die auf den Wärmetauscherflächen abgelagerten halogenreichen Schwermetallmischsalzen bevorzugt in Sulfate umwandelt, die Neubildung von Dioxinen und Furanen so weit wie möglich verhindert und zugleich die zusätzliche Zuführung an schwefelhaltigen Hilfs- oder Brennstoffen sowie eine zusätzliche Belastung der Rauchgasreinigung und Aufwendungen zur Neutralisation der Schwefeloxide auf ein Minimum reduziert.

Es sollten dabei schwefelhaltige Produkte so verbrannt werden, dass ein maximaler Anteil an Schwefeltrioxid entsteht. Diese Reaktion kann erzwungen werden, wenn z. B. feindispergierter elementarer Schwefel über eine geeignete Vorrichtung mit Luft angesaugt, mit dieser in den Feuerraum eingeblasen und mit hohem Luftüberschuss bei erhöhten Temperaturen verbrannt wird. Hierfür geeignete typische Vorrichtungen werden im folgenden als SO₃-Brenner bezeichnet und beschrieben.
Es wird nicht angestrebt, die gesamte Chloridfracht im Rauchgas über die Sulfatisierung zu verändern. Aufgabe der vorliegenden Erfindung ist es vielmehr, S03 über den Rauchgasstrom unverbraucht bis zu den Belägen der nachfolgenden Wärmetauschereinrichtungen zu transportieren und nur die ruhenden Beläge an den Wänden durch vergleichsweise geringe SO3-Konzentrationen zu sulfatisieren. Durch gezielte Sulfatisierung der Beläge könnte bei minimalem SO₃-Verbrauch die de-Novo-Synthese von Dioxinen gehemmt und die halogensalz-induzierte Korrosion der Wärmetauscherflächen drastisch verringert werden.

Die Aufgabe wird mit einem Verfahren gemäß Anspruch 1 gelöst. Weitere Vorteile ergeben sich aus den abhängigen Ansprüchen sowie der nachfolgenden Beschreibung.

Die Ergebnisse hinsichtlich der verstärkten Korrosionsneigung wurden auch durch Versuche nach Umstellung der Anfahr- und Stützbrenner einer Abfallverbrennungsanlage von schwerem Heizöl (ca. 2 %S) auf Heizöl EI (<0,2 %S) bestätigt.

Die Erfinder haben erkannt, dass nach den Reaktionsmechanismen und der Reaktivität der beteiligten Gase Cl₂, SO₂ und SO₃ der SO₃ -Anteil bevorzugt das Cl⁻ aus den entsprechenden Salzen austreibt und dass bei der üblichen Verbrennung von schwefelhaltiger Kohle nur ein geringer Anteil des Schwefels zu SO₃ oxidiert. Somit kamen die Erfinder zu dem überraschenden Ergebnis, dass das Verfahren mit Zugabe schwefelhaltiger Kohle nur unter bestimmten Bedingungen wirtschaftlich betrieben werden kann. Die Zugabe an Schwefel bzw. Kohle muss bei Berücksichtigung der im Stand der Technik genannten Anteile 20 bis 100-fach höher sein, als das für die von den Erfindern angestrebte Reaktion notwendig ist.

### Konstruktive und betriebliche Schutzmaßnahmen

Es wurden in den unterschiedlichen Kesselbereichen geeignete Schutzmaßnahmen entwickelt, die mit Ausnahme der Überhitzerbereiche hinnehmbare Standzeiten gestatten.

Zum Schutz der warmfesten Stähle gegen diese aggressiven Gase wurden diese mit unterschiedlichen Erfolgen im Bereich der Rauchgastemperaturen bis zu 800 °C mit Feuerfestzustellungen geschützt. Man hat jedoch sehr schnell erfahren müssen, dass viele dieser Produkte von Dämpfen (z.B. ZnCl₂) durchdrungen werden und unter den Zustellungen Korrosionsschäden an den Heizflächen verursachen. Einen großen Vorteil brachten die dichten nitridgebundenen SiC-Platten und vergleichbare Produkte, die mit geeigneten Massen vor den Heizflächen installiert sind.

Bei Heizflächen, die mit tieferen Rauchgastemperaturen im Bereich zwischen 1000 und 700°C angeströmt werden, hat sich der Einsatz von Auftragschweißungen mit Nickelbasislegierungen bewährt. Diese Verfahren wurden als Auftragsschweißung oder unter dem Begriff Cladding mit z. B. Alloy 625 bekannt. Alternativ werden auch Compoundrohre aus druckfesten wasser- und dampfführenden ferritischen Kesselrohren, die bei der Herstellung mit einem austenitischen Rohrmantel (Vollmaterial) überzogen werden, eingesetzt. Der Einsatz thermischer Spritzschichten wird erprobt und einige Schichtsysteme haben den technischen Stand von Prototypen erreicht, an denen weiter entwickelt wird.

Das Aufbringen dieser Schutzschichten ist sehr aufwändig. Die Standzeiten sind in Abhängigkeit der Qualität der Schweißung, der Belastung aus dem Rauchgas und dem Temperaturregime begrenzt.

Weitere Vorteile des erfindungsgemäßen Verfahrens ergeben sich anhand der nachfolgenden Beschreibung. Das Verfahren ist dabei nicht auf die in der Beschreibung in Kombination aufgeführten Merkmale beschränkt zu sehen. Es versteht sich, dass die Beispiele zur Erläuterung dienen und das erfindungsgemäße Verfahren auch in abweichenden Merkmalskombinationen durchgeführt werden kann.

### Beschreibung des erfindungsgemäßen Verfahrens

Wesentlich für das erfindungsgemäße Verfahren ist das Einbringen von pulverförmigem Schwefel mit mindestens zweifach überstöchiometrischer Sauerstoffmenge. Stöchiometrisch bezieht sich hierbei auf die Menge an Sauerstoff, die benötigt wird, um eine bestimmte Menge Schwefel exakt zu Schwefeltrioxid umsetzen zu können. Gemäß der Gleichung: S + 1,5 O₂ = SO₃

Werden für 32 g Schwefel 48 g Sauerstoff, was etwa 33 Litern Sauerstoff bei Raumtemperatur entspricht, benötigt. Das Verhältnis 32 g Schwefel zu 48 g Sauerstoff ist das stöchiometrische Verhältnis, das unter Gleichgewichtsbedingungen für den Ablauf der obigen Reaktion mindestens benötigt wird. Zweifach überstöchiometrisch bezeichnet daher ein Schwefel zu Sauerstoff Verhältnis, bei dem die dreifache Menge an Sauerstoff vorgelegt wird. Das Verhältnis von Schwefel zu Sauerstoff beträgt daher bei zweifach überstöchiometrischem Ansatz 32 g Schwefel zu 144 g Sauerstoff.

Sinkt der Sauerstoffgehalt relativ zum Schwefel unter den vorgegebenen Wert, so kam es beim thermischen Zünden des Schwefels zu Unregelmäßigkeiten und selbst bei direkt gezündeten Schwefel/Sauerstoff-Gemischen konnte die Sulfatisierung von in den Rauchgasstrom eingebrachten Testkörpern nicht zuverlässig bewirkt werden. Die Erfinder stellten fest, dass bei geringerem Sauerstoffgehalt S02 erzeugt wird.

Das Einblasen des pulverförmigen Schwefels kann beispielsweise über mindestens einen Freistrahl mit einer Einblasgeschwindigkeit von 50 bis 100 m/sec erfolgen. Der Begriff "Freistrahl" bezeichnet hierbei einen spitzwinklig und horizontal zum aufströmenden Rauchgasstrom ausgerichteten Strahl, der durch die hohe Einblasgeschwindigkeit an seinen seitlichen Strahlgrenzen aufweitend turbulent verwirbelt und mit zunehmender Eindringtiefe innig mit dem Rauchgas vermischt wird.

Besonders vorteilhaft ist das Einblasen des Schwefel/Sauerstoff-Gemisches mit zentrisch eingebrachtem, schnell strömendem, sauerstoffhaltigem Treibmedium, konzentrisch zugeführtem Schwefel und konzentrisch dazu angeordnetem Freistrahl, wie er z.B. aus den Sekundärluftdüsen im Bereich des ersten Strahlungszugs austritt. Hierbei wird der Schwefel, angeordnet zwischen zwei sauerstoffhaltigen Gasströmen, bei stetem Sauerstoffüberschuss über eine innere und eine äußere Flammfront zu S03 umgesetzt. Die Flammfronten erwärmen sich dabei gegenseitig durch die freigesetzte Reaktionswärme. Weiterhin bewirken die beiden Gasströme eine innige Verwirbelung des erzeugten SO₃ im weiteren Ausflussbereich und stellen so bereits nach der Hälfte der sonst erforderlichen Zeit eine gleichmäßige Konzentration an SO₃ im Rauchgasstrom bereit.

Vorteilhaft erfolgt das Einblasen des pulverförmigen Schwefels bei einer Rauchgastemperatur zwischen 800 und 1300°C, bevorzugt 900 bis 1200°C, besonders bevorzugt 1000 bis 1200°C. Ab Temperaturen von oberhalb 800°C stellt ein mit 3 bis 4 m/sec aufwärtsströmender Rauchgasstrom eine ausreichende Wärmestrahlung bereit, um den eingebrachten Schwefel in kürzester Zeit auf Zündtemperatur aufzuheizen. Bei Temperaturen oberhalb von 1000°C konnte regelmäßig ein Zünden des eingebrachten Schwefel/Sauerstoff-Gemisches innerhalb einer Zehntelsekunde erreicht werden.

Bevorzugt wird das Schwefel/Sauerstoff-Gemisch direkt im vorderen Ausströmungsbereich im Rauchgas gezündet. Die Zündtemperatur kann dabei zusätzlich über einen Zündbrenner, dessen Flamme zentrisch zum eingeblasenen Schwefel/Sauerstoff-Gemisch-Strom angeordnet ist und in den Strömungsraum des aufströmenden Rauchgases hineinreicht, unterstützt werden. Eine pyrometrische Kontrolle des eingeblasenen Schwefel/Sauerstoff-Gemisches ergab, dass eine schlagartige Zündung des Gemisches direkt nach dem Einbringen mit einer Partikeltemperatur des im Gasstrom transportierten Schwefels von mindestens 500°C einhergeht. Im spezifisch eingestellten Sauerstoffüberschuss verbrennt der Schwefel nachfolgend in einer Flammfront mit einer Flammtemperatur zwischen 500 und 700°C.

Als sauerstoffhaltiges Treibmedium konnten reiner Sauerstoff, Luft sowie unterschiedliche Mischungen von Sauerstoff mit einem Inertgas wie z.B. Stickstoff verwendet werden, wobei bei einem Sauerstoffgehalt von etwa 20% bezogen auf die gesamte, eingebrachte Gasmenge stets die Sulfatisierung der Beläge auf den nachfolgenden Wärmetauscherflächen sichergestellt wurde. Bei Sauerstoffgehalten von weniger als 20% Sauerstoff im Gasanteil des Sauerstoff/Schwefel-Gemisches erfolgte die Zündung des Schwefels unregelmäßig.

Bevorzugt erfolgt das Einbringen des Sauerstoff/Schwefel-Gemisches über mindestens einen Freistrahl, wobei die Einblasgeschwindigkeit des horizontal ausgerichteten Freistrahls zur vertikalen Aufsteiggeschwindigkeit des Rauchgases in einem Verhältnis von 15 zu 1 oder mehr gehalten wird. Die turbulente Verwirbelung des Freistrahls in Kombination mit der vertikalen Fortbewegung des Rauchgases führt zu einer innigen Durchmischung des frisch erzeugten SO₃ zusammen mit dem überschüssigen Sauerstoff, sodass bereits nach 2 Sekunden eine homogene Verteilung des frisch erzeugten SO₃ zusammen mit dem überschüssigen Sauerstoff im Rauchgas erzielt wird. Auf diese Weise wird eine gleichmäßige Bedeckung der nachfolgenden Wandbeläge der Wärmetauscherflächen mit dem frisch erzeugten Schwefeltrioxid bereitgestellt. Die Sulfatisierung erfolgt gleichmäßig und zuverlässig über alle nachfolgenden Beläge hinweg.

Sulfatisierung bedeutet im Sinne der vorliegenden Erfindung die Umsetzung von festen, in den Wärmetauscherbelägen gebundenen, Schwermetall- sowie Metallhalogeniden zu Sulfaten unter Freisetzung von Halogenwasserstoffen und Halogeniden. Die Halogenwasserstoffe und Halogenide werden ausgetragen, sind für eine weitere Reaktion zu Dioxinen nicht geeignet und können auf bekannte Art und Weise aus dem Rauchgas entfernt werden.

Bei der Verbrennung gut durchmischter Hausmüllfraktionen aus Siedlungsgebieten konnte bereits mit einer SO₃-Konzentration von 10 mg/Nm³ Rauchgas eine stete Sulfatisierung der Beläge der Wärmetauschereinrichtungen erzielt werden, was mit einer drastischen Absenkung der Schwermetallmischsalzkorrosion und der Konzentration an Furanen/Dioxinen einherging.

### Beschreibung eines typischen Verbrennungskessels mit den S03-Brennern.

Das beschriebene Verfahren ist grundsätzlich für allen Typen von Rost-, Wirbelschicht-, Staubbrenner- und alternativ befeuerten Verbrennungskesseln geeignet.

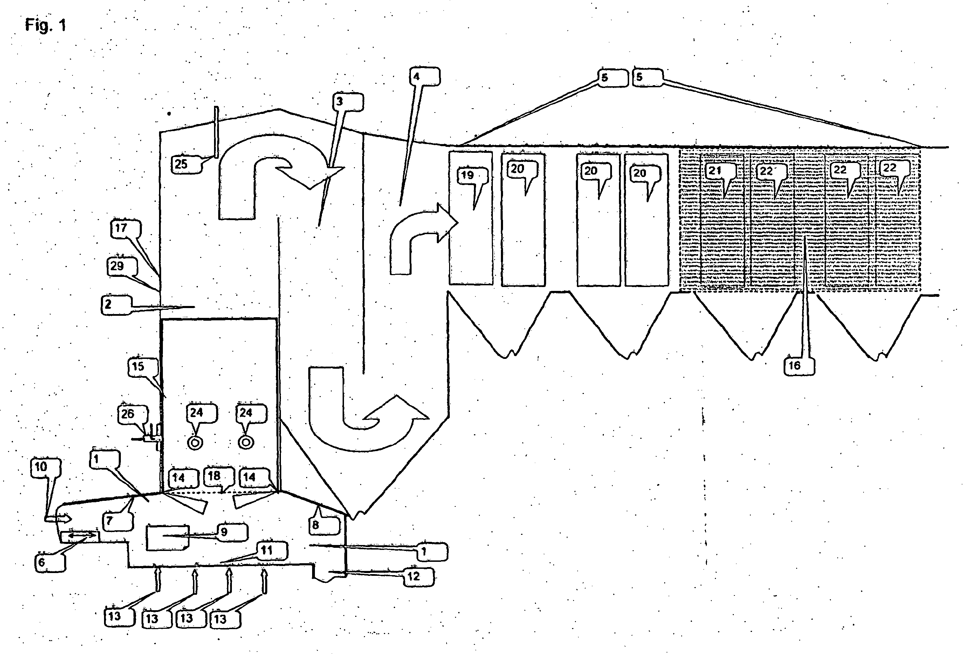

In der Figur 1 ist ein typischer Verbrennungskessel mit einem Feuerraum (1), dem ersten Strahlungszug (2), dem zweiten Strahlungszug (3) und dem dritten Strahlungszug (4) sowie einem konvektiven Zug (5) dargestellt. Der Feuerraum (1) ist im Wesentlichen begrenzt durch den Zuteiler (6), die Zünddecke (7), die Ausbranddecke (8) und die Seitenwände des Feuerraums (9). Die Brennstoffzufuhr erfolgt über die Müllzufuhr (10) und den Zuteiler (6). Die Verbrennung erfolgt auf dem Verbrennungsrost (11). Die ausgebrannte Schlacke fällt nach dem Rost (11) in den Schlackefallschacht (12) zum Entschlacker. Die Primärluft (13) wird durch den Rost (11) zugeführt: Die Sekundärluft (14) dient der Vermischung und dem sichereren Ausbrand der Gase vor dem Eintritt in den ersten Strahlungszug (2). Über der Sekundärlufteindüsung (14) sind die Anfahr- und Stützbrenner (24) installiert

Die Wände des ersten Strahlungszuges können zur Einhaltung der Mindestverbrennungsbedingungen und zum Schutz der Heizflächen gegen Korrosionen im unteren Bereich mit Feuerfestzustellung (15) zugestellt sein.

Die Membranwände (29) über der Feuerfestzustellung (15) im ersten Strahlungszug (2) und zum Teil im zweiten Strahlungszug (3) können mit einer Aufschweißung aus Nickelbasislegierungen (17) gegen Korrosionen geschützt werden. Danach sind bei den üblichen Siedewassertemperaturen von 240 bis 320°C und den abgesenkten Rauchgastemperaturen üblicherweise keine Korrosionsschutzmaßnahmen im unteren Teil des zweiten Zuges (3) und dem dritten Zug (4) erforderlich.

Die Rauchgase kühlen sich üblicherweise vom Eintritt (18) in den ersten Zug (2) mit 1000 - 1300°C bis zum Verlassen des dritten Zuges (4) auf 450 - 650°C ab und treten mit diesen Temperaturen in den konvektiven Zug (5) ein. Im konvektiven Zug (5) kühlen sich die Rauchgase an einem Schutzverdampfer (19), an Überhitzern (20), Verdampfern (21) und Economisern (22) auf 180 - 230°C ab und verlassen den Kessel durch den Abgaskanal (23).

Im Bereich (16) bildeten sich bisher in den Belägen auf katalytischem Weg neue Dioxine und Furane (De Novo Synthese), die nunmehr durch Deaktivierung des Katalysators unterbunden werden.

Der SO₃-Brenner (26) kann grundsätzlich in allen Bereichen des Kessels angeordnet werden. Er bringt aber besondere Vorteile in Verbindung mit einer Einleitung im Bereich der Sekundärluftdüsen.

In der beispielhaft gewählten Darstellung in Figur 1 ist der SO₃-Brenner (26) in der Membranwand des ersten Zuges (2) etwa in der Höhe der Anfahr- und Stützbrenner (24) angeordnet. Damit wird sichergestellt, dass die schwefelhaltigen Produkte bereits im Anfahrbetrieb sicher gezündet und mit Überschuss an Sauerstoff zu einem möglichst hohen SO₃-Umsatz verbrannt werden. Der SO₃-Brenner (26) ist mit der Kesseldeckentemperatur (25) und/oder den Anfahr- und Stützbrennern (24) sicherheitstechnisch so verriegelt, dass eine Zündung des schwefelhaltigen Brennstoffes sichergestellt ist. Durch die Anordnung des SO₃-Brenners (26) mit der SO₃-Flammentwicklung (32) im Bereich einer hohen Turbulenz oberhalb der zur Vermischung vorgesehenen Sekundärluftdüsen ist eine gute Vermischung der SO₃ Gase in den Rauchgasen des Kessels sichergestellt.

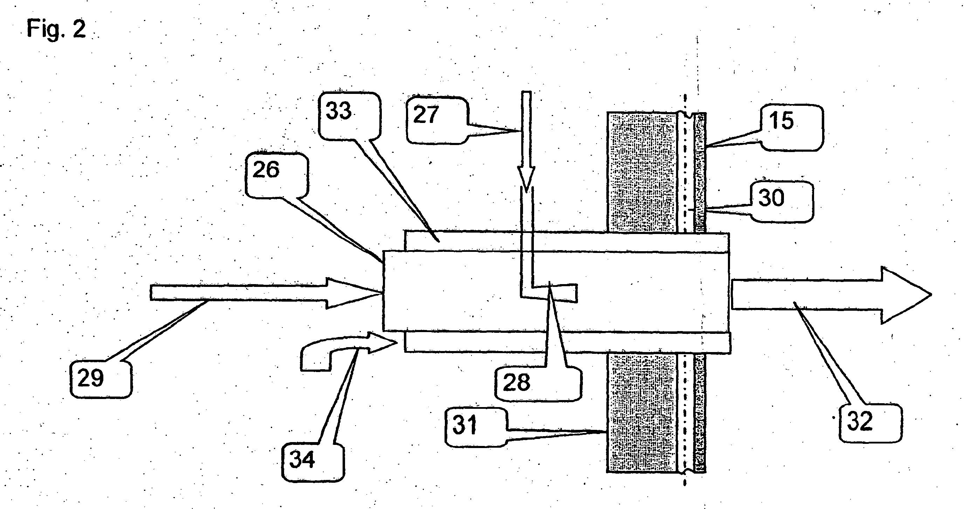

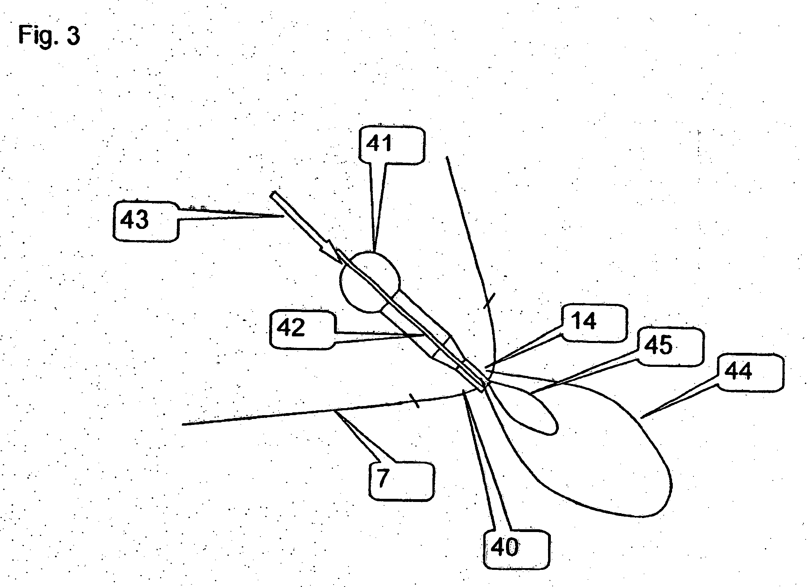

In den Figuren 2 und 3 werden die SO₃-Brenner dargestellt.

Die konzentrische Dosierung der schwefelhaltigen Brennstoffe - z.B. in den Sekundärluftdüsen - ist in der Figur 3 skizziert. Besonders hier ist zunächst der Überschuss an Sauerstoff und danach die Vermischung mit den Rauchgasen sichergestellt. Dieses Verfahren wird bei normalem Betrieb der Anlage genutzt, da dann im Außenbereich des Freistrahls der Sekundärluft für die Zündung und direkte Verbrennung des Schwefels zum S03 die notwendige hohe Temperatur durch die Strahlung sichergestellt ist. Im Anfahrbetrieb kann die Zündtemperatur über zusätzlichen Wärmeeintrag wie z.B. über Zünd- und/oder Stützbrenner gewährleistet werden.

In der Fig. 2 wird der SO₃-Brenner (26) als Prinzipskizze in der Einbaulage in der Membranwand (30) dargestellt. In diesem Beispiel wird ein Staubbrenner dargestellt. Bei der Dimensionierung des SO₃-Brenners ist die Isolation (31) und die Feuerfestzustellung (15) der Membranwand zu berücksichtigen. Der SO₃-Brenner wird über entsprechend dimensionierte Anschlüsse mit einem sauerstoffhaltigen Treibmedium (27) und mit schwefelhaltigem Brennstoff (29) versorgt. Die Düse für das Treibmedium (28) ist zentrisch im Brenner 26 installiert. Zum Schutz gegen die widrigen Bedingungen wird um den SO₃-Brenner eine Schutzhülse (33) installiert, die mit Spül- und Kühlluft (34) versorgt wird.

In der Figur 3 wird die Vorrichtung konzentrisch in einer Sekundärluftdüse (14) dargestellt. Die Düse ist in der Zündnase (40), dem Übergangbereich von der Kesselwand des 1. Zuges (2) und der Zünddecke (7) installiert. Die Sekundärluftdüse wird über die Sekundärluftzuführleitung (41) mit Luft versorgt. Durch die Verbrennung der Gase aus der Feuerung mit der Sekundärluft bildet sich die äußere Flammfront (44) aus. Vorzugsweise wird konzentrisch in der Sekundärluftdüse (14) das Zuführrohr (42) für die zu verbrennenden schwefelhaltigen Substanzen installiert. Die Zuführung schwefelhaltiger Substanzen (43) erfolgt in das Zuführrohr (42). Direkt vor dem Zuführrohr (42) bildet sich die innere Flammfront (45) aus. Die Zündung und Beheizung der Schwefelverbrennung mit der Ausbildung der inneren Flammfront (45) erfolgt durch die äußere Flammfront (44).
Um bei einem Kessel mittlerer Größe mit einer Rauchgasmenge von 70.000 Nm³/h bilanztechnisch eine SO₃-Konzentration von 50 mg/Nm³ einzustellen, wird bei vollständigen Umsatz eine Menge von 1,4 kg/h elementarer Schwefel benötigt. Der stöchiometrische Sauerstoffbedarf errechnet sich zu 1,5 Nm³/h entsprechend einer Luftmenge von 7 Nm³/h. Diese Volumenströme sind bezogen auf die Rauchgasmenge von 70000 m³/h so gering, dass auch ein 10-facher Luftüberschuss im Abgas des Kessels kaum messbar sein dürfte. Diese SO₃ Fracht wird praktisch eine äquivalente Menge an Cl⁻ freisetzen und über diesen Weg einen zusätzlichen Kalkhydratverbrauch von 3,3 kg/h verursachen. Die zu entsorgende Neutralisationsmenge beträgt bei stöchiometrischer Reaktion und Einsatz von Calciumhydroxid 4,8 kg/h Calciumchlorid.

### Vergleichsbeispiel

Nimmt man den in der Patentschrift DE 10131464 B4 angestrebten SO₂-Überschuss von 1000 mg/m³ im Rohgas als Größenordnung für eine Vergleichsrechnung mit gleichem Volumenstrom an, so benötigt man hierfür 35 kg/h elementaren Schwefel und bei stöchiometrischer Neutralisation in der Rauchgasreinigung 81 kg/h Calciumhydroxid. Die zu entsorgende Sulfit- oder Sulfatmenge beträgt 131 bzw. 149 kg/h.

Für eine Konversionsrate von 2 % ist die notwendige SO₂-Konzentration mit 2500 mg/Nm³ um ca. 50-fach höher. Entsprechend höher sind auch die einzubringende Schwefel- und Calciumhydratfracht sowie die zusätzlich zu entsorgende Reststoffmenge. Wollte man bei gleicher Rauchgasmenge die gleiche SO₃-Konzentration von 50 mg/Nm³ mit schwerem Heizöl (2% S) und gleicher Konversionsrate von 2 % erreichen, müsste man dafür ca. 5600 l/h Öl verbrennen und würde dabei die zulässige Dampfleistung des Kessels massiv überschreiten.

### Bezugszeichenliste

- 1.: Feuerraum
- 2.: Erster Strahlungszug
- 3.: Zweiter Strahlungszug
- 4.: Dritter Strahlungszug
- 5.: Konvektiver Zug
- 6.: Zuteiler
- 7.: Zünddecke
- 8.: Ausbranddecke
- 9.: Seitenwände des Feuerraums
- 10.: Müllzufuhr
- 11.: Verbrennungsrost
- 12.: Schlackenfallschacht
- 13.: Primärluft
- 14.: Sekundärluft
- 15.: Feuerfestzustellung
- 16.: Rauchgasabflussseitiger Bereich des konvektiven Zugs 5
- 17.: Aufschweißung aus Nickelbasis-Legierung
- 18.: Eintritt in den ersten Zug
- 19.: Schutzverdampfer
- 20.: Überhitzer
- 21.: Verdampfer
- 22.: Economiser
- 23.: Abgaskanal
- 24.: Stützbrenner
- 25.: Kesseldeckentemperatur
- 26.: SO₃-Brenner
- 27.: Sauerstoffhaltiges Treibmedium
- 28.: Düse für Treibmedium
- 29.: Schwefelhaltiger Brennstoff
- 30.: Membranwand
- 31.: Isolation
- 32.: SO₃-Flammentwicklung
- 33.: Schutzhülse
- 34.: Kühlluft
- 40.: Zündnase
- 41.: Sekundärluftzufuhrleitung
- 42.: Zuführrohr
- 43.: schwefelhaltige Substanz
- 44.: äußere Flammenfront
- 45.: innere Flammenfront

## Patentansprüche

1. Verfahren zur Reduzierung halogensalz-induzierter Korrosionen an den Belägen der Heizflächen von Wärmetauschereinrichtungen eines Verbrennungskessels und zur Vermeidung der de-Novo-Synthese von Dioxinen und Furanen, wobei in dem Feuerraum schwefelhaltige Produkte verbrannt werden,
**dadurch gekennzeichnet, dass** kristalliner oder amorpher, pulverförmiger Schwefel in dem Verfahren, umfassend die Schritte
a) Einblasen von pulverförmigem Schwefel mit mindestens zweifach überstöchiometrischer Sauerstoffmenge in einen aus einen Feuerraum aussteigenden Rauchgasstrom
b) Aufheizen des pulverförmigem Schwefels durch Wärmestrahlung
c) thermisches Zünden des Schwefels im Sauerstoffüberschuss
d) Verbrennen des Schwefels im Sauerstoffüberschuss zu SO₃ im Rauchgasstrom unter stetem Sauerstoffüberschuss und äußerer Wärmezufuhr zu SO₃ oxidiert, zusammen mit dem überschüssigen Sauerstoff im Rauchgas verteilt und zu den Belägen an den nachfolgenden Wärmetauschereinrichtungen weitertransportiert wird, wobei die Beläge durch das SO₃ sulfatisiert werden.

2. Verfahren nach dem vorhergehenden Anspruch, **dadurch gekennzeichnet, dass** in Schritt c) das thermische Zünden des Schwefels bei einer Partikeltemperatur von mindestens 500 °C ausgeführt wird.

3. Verfahren nach einem der beiden vorhergehenden Ansprüche, **dadurch gekennzeichnet, dass** in Schritt d) der Schwefel bei einer Flammtemperatur zwischen 500 und 700°C verbrannt wird.

4. Verfahren nach einem der vorhergehenden Ansprüche, **dadurch gekennzeichnet, dass** die Schritte a) bis d) innerhalb von 0,3 , bevorzugt 0,1 , Sekunden durchgeführt werden.

5. Verfahren nach einem der vorhergehenden Ansprüche, **dadurch gekennzeichnet, dass** als Sauerstoffträger Luft oder sauerstoffangereicherte Luft eingesetzt wird.

6. Verfahren nach einem der vorhergehenden Ansprüche, **dadurch gekennzeichnet, dass** nach Vermischung des Rauchgases eines Verbrennungskessels mit dem im Rauchgas erzeugten SO₃ eine SO₃ Konzentration von 10 -100 mg pro Nm³ Rauchgas eingestellt wird.

## Claims

1. Method for reducing halogen salt-induced corrosion at deposits on the heating surfaces of heat exchanger means of a combustion boiler, and for preventing the de novo synthesis of dioxins and furans, wherein sulphur-containing products are burned in the combustion chamber,
**characterised in that** in said method, comprising the steps of
a) injecting powdered sulphur with an amount of oxygen at least twice in excess of stoichiometry into a flue gas stream rising from a combustion chamber;
b) heating the powdered sulphur by thermal radiation;
c) thermal ignition of the sulphur in excess oxygen;
d) burning the sulphur in excess oxygen to generate SO₃;
crystalline or amorphous, powdered sulphur is oxidised in the flue gas stream in a constant excess of oxygen and with external heat supply to SO₃, distributed in the flue gas along with the excess oxygen, and further transported to the deposits on subsequent heat exchanger means, said deposits being sulphatized by the SO₃ in the process.

2. The method according to the preceding claim, **characterised in that** in step c) the thermal ignition of sulphur is performed at a particle temperature of at least 500 °C.

3. The method according to any one of the two preceding claims, **characterised in that** in step d) sulphur is burned at a flame temperature of between 500 and 700 °C.

4. The method according to any one of the preceding claims, **characterised in that** steps a) to d) are performed within 0.3 seconds, preferably within 0.1 seconds.

5. The method according to any one of the preceding claims, **characterised in that** air or oxygen-enriched air is used as an oxygen carrier.

6. The method according to any one of the preceding claims, **characterised in that** after mixing the flue gas of a combustion boiler with the SO₃ generated in the flue gas, an SO₃ concentration of 10 to 100 mg per Nm³ of flue gas is adjusted.

## Revendications

1. Procédé pour réduire les corrosions induites par les halogénures contre les revêtements des surfaces de chauffe de dispositifs d'échange de chaleur d'une chaudière de combustion et pour éviter la synthèse de novo de dioxines et de furannes, des produits sulfurés étant brûlés dans le foyer, **caractérisé en ce qu'**on oxyde du soufre pulvérulent, cristallin ou amorphe, dans le procédé comprenant les étapes dans lesquelles :
a) on introduit par soufflage du soufre pulvérulent avec une quantité d'oxygène au moins deux fois supérieure à la quantité stoechiométrique dans un courant de gaz de fumée qui s'élève à partir d'un foyer ;
b) on chauffe le soufre pulvérulent par irradiation thermique ;
c) on procède à l'allumage thermique du soufre dans l'oxygène en excès ;
d) on brûle le soufre dans l'oxygène en excès pour obtenir du SO₃ ;
dans le courant de gaz de fumée, avec un excès constant d'oxygène et un apport externe de chaleur, pour obtenir du SO₃, on le distribue conjointement avec l'oxygène en excès dans le gaz de fumée et on le guide en direction des revêtements contre les dispositifs suivants d'échange de chaleur, les revêtements étant sulfatés par le SO₃.

2. Procédé selon la revendication précédente, **caractérisé en ce qu'**on met en oeuvre l'allumage thermique du soufre, à l'étape c), à une température des particules d'au moins 500 °C.

3. Procédé selon l'une quelconque des deux revendications précédentes, **caractérisé en ce qu'**on brûle le soufre à l'étape d), à une température des flammes entre 500 et 700 °C.

4. Procédé selon l'une quelconque des revendications précédentes, **caractérisé en ce qu'**on met en oeuvre les étapes a) à d) dans un laps de temps de 0,3, de préférence de 0,1 seconde.

5. Procédé selon l'une quelconque des revendications précédentes, **caractérisé en ce qu'**on met en oeuvre, à titre de porteur d'oxygène, de l'air ou de l'air enrichi en oxygène.

6. Procédé selon l'une quelconque des revendications précédentes, **caractérisé en ce que**, après le mélange du gaz de fumée d'une chaudière de combustion avec le SO₃ généré dans le gaz de fumée, on règle une concentration du SO₃ de 10 à 100 mg par Nm³ de gaz de fumée.
